# EUROPÄISCHE PATENTANMELDUNG

(11) **EP 1 164 292 A1**
(43) Veröffentlichungstag der Anmeldung: **19.12.2001**
(21) Anmeldenummer: 00112627.5
(22) Anmeldetag: 15.06.2000
(51) Int. Cl.: F04B 43/00, F16J 3/02

(54) **Einrichtung zur Erkennung von Undichtheiten an Membranen**

(71) Anmelder: Firma Carl Freudenberg, 69469 Weinheim (DE)
(72) Erfinder: Röhner, Gerhard, 69502 Hemsbach (DE); Diemann, Hans-Jürgen, 64668 Rimbach (DE); Keller, Heinz, 69488 Birkenau (DE); Bock, Eberhard, Dr., 69509 Mörlenbach (DE); Plechinger, Jens, 69469 Weinheim (DE)

(57) **Zusammenfassung**

Einrichtung zur Erkennung von Undichtheiten und Ermüdungen an Membranen, wobei die Membran aus wenigstens zwei Membrantellern (30,34) besteht und daß zumindest einer der Membranteller (1,8,12,17,30) auf seiner Innenfläche mit wenigstens einem Leiter (3,7,13,18,31) belegt ist, der bei einer Veränderung an der Membran beziehungsweise am Leiter (3,7,13,18,31) eine Änderung einer Messgröße bewirkt.

## Beschreibung

### Technisches Gebiet

Der Einsatz von Membranen ist vielfältig. Eine häufige Anwendung ist bei Maschinen mit einem hydraulischen oder pneumatischen Antrieb gegeben. Dabei wird ein Fluid durch die Bewegung der Membran gefördert. Weit verbreitet sind Membranpumpen in der pharmazeutischen, biologischen und auch in der Nahrungsmittel-Industrie. Dort kommt es auf eine hohe Reinheit des geförderten Fluids an. Ein anderes Einsatzgebiet ist die Chemieindustrie, bei der es vor allen Dingen darauf ankommt, daß das geförderte Fluid nicht nach außen treten kann, da es beispielsweise giftig, toxisch oder auch feuergefährlich ist. Bei diesen Einsatzgebieten ist es erwünscht und zum Teil auch notwendig, daß die Membran auf ihre Dichtigkeit ständig überprüft wird. Hierfür sind verschiedene Einrichtungen bekannt geworden.

### Stand der Technik

In der DE OS 37 29 726 ist eine Membran-Maschineneinheit gezeigt, die zumindest zwei Membranen enthält, die einen zwischen ihnen liegenden Spalt bilden, der mit einem Melder für Fluidleckagen verbunden ist. Wird eine der Membranen zerstört, so dringt das Fluid in den Spalt zwischen den Membranen und über einen Leckmelder wird die Störung erkannt. Eine solche Einrichtung ist relativ aufwendig in ihrem Aufbau und Störungen können erst erkannt werden, wenn eine größere Menge an Leckflüssigkeit austritt. Der Effekt kann auch erst eintreten, wenn die aneinander anliegenden Membranen durch die austretende Flüssigkeit auseinander gedrückt werden. Erst dann können die Membranen durch die austretende Flüssigkeit auseinandergedrückt werden. Erst dann kann die Flüssigkeit zu dem Melder gelangen. Dabei muß die Flüssigkeit auch noch an den Ort des Melders gelangen.

Eine andere Möglichkeit für die Erfassung einer Störung an einer Membran zeigt die EP PS 0 486 618. Dort sind zwei im Abstand zueinander angeordnete Membranen vorgesehen und Sensoren angebracht, die das Eintreten der Flüssigkeit zwischen die Membranen entdecken sollen. Auch hier erfolgt die Entdeckung erst wenn größere Mengen an Flüssigkeit in den Raum zwischen den Membranen eingetreten sind. Darüberhinaus ist die konstruktive Ausbildung der Membran mit dazugehörigem Detektor äußerst aufwendig.

Eine weitere Möglichkeit eine Beschädigung einer Membran zu entdecken, ist in der EP PS 0 715 690 gezeigt. Dort ist eine Pumpenmembran behandelt, die eine Schicht aus einem verdichteten, porösen Polytetrafluorethylen (PTFE) enthält, in die eine elektrisch leitende Faser aus expandiertem porösem PTFE eingebettet ist. Die Enden der Faser können an ein elektrisches Messgerät angeschlossen werden. Durch das Messen von Änderungen der Leitfähigkeit durch die leitende Faser können Ermüdungserscheinungen an der Membran oder auch Risse entdeckt werden. Diese Konstruktion hat den Nachteil, daß sie sehr aufwendig herzustellen ist und deshalb mit hohen Kosten verbunden ist.

### Darstellung der Erfindung

Der Erfindung liegt die Aufgabe zugrunde, eine Einrichtung zur Erkennung von Undichtheiten oder auch Ermüdungserscheinungen an Membranen zu schaffen, die in ihrem konstruktiven Aufbau einfach gehalten ist und mit möglichst geringem Aufwand hergestellt werden kann. Die Lösung der gestellten Aufgabe erfolgt bei einer Einrichtung zur Erkennung von Undichtheiten und ähnlichem an Membranen, erfindungsgemäß dadurch, daß die Membran als Doppelmembran aus zweier Membrantellern ausgebildet ist und zumindest einer der Membranteller mit wenigstens einem Leiter belegt ist, der bei einer Veränderung an der Membran beziehungsweise am Leiter eine Änderung einer Messgröße bewirkt. Bei einer solchen Ausbildung der Membran fallen optische Einrichtungen zur Erkennung von Flüssigkeitsansammlungen weg und es ist auch nicht erforderlich elektrische Leiter in eine Membranschicht direkt einzubetten. Neben einer günstigen Herstellungsmöglichkeit ist der Vorteil gegeben, daß Beschädigungen an der Membran schnell und auch in ihrer Größe erkannt werden.

Eine sehr einfache Möglichkeit sieht vor, am Metallteller elektrisch leitfähige Metallleiter oder Elastomerleiter-Schlingen anzuordnen. Die Schlinge kann beispielsweise strahlenförmig am Membranteller angeordnet sein. Andere Konfigurationen sind selbstverständlich möglich.

Gemäß einer anderen Ausführungsform der Erfindung kann am Membranteller ein aus einer Glasfaser oder einer Kunststofffaser gebildeten Lichtleiter angefügt sein. Dieser Lichtleiter kann als geschlossene Leiterschleife oder auch als offene Leiterschleife mit verspiegeltem Ende ausgeführt werden.

Möglich ist auch, daß der Leiter aus einem am Membranteller angefügten Kanal mit einem flüssigen Medium besteht. Der Kanal wird dabei konzentrisch zur Membrantellermitte angeordnet.

Eine besonders platzsparende und fertigungstechnisch günstig herstellbare Überwachungseinrichtung wird dadurch erreicht, daß der Leiter ein leitfähiges Vliesstoff oder Elastomermuster ist. Hiermit kann die gesamte Oberfläche des zugehörigen Membrantellers überzogen werden, so daß eine sehr genaue Brucherkennung erreicht wird. Das Vliesstoffmuster kann beispielsweise aus einem Vlies mit Kohlenstofffäden hergestellt werden. Dabei können unterschiedliche Figurationen ausgestanzt werden. Die Ausbildung des Vliesstoffmusters oder auch des Elastomermusters als Gewebe mit metallischen und/oder Kohlenstofffasern ist eine weitere Möglichkeit.

Eine sehr zweckmäßige Ausführungsform wird dadurch erreicht, daß das Elastomermuster Metall- und/oder Kohlenstoffpartikel enthält, die im Siebdruckverfahren auf den Membranteller aufgebracht sind. Hierdurch wird eine besonders flache Ausbildung der Membran erreicht.

Günstig ist ebenfalls wenn der Elastomerleiter aus einer elektrisch leitfähigen Elastomerfolie besteht, die auf den Membranteller aufvulkanisiert ist.

Die neue Membran-Überwachungseinrichtung wird prinzipiell aus mindestens zwei Membrantellern gebildet, wobei wenigstens einer der Teller auf seiner Innenseite einen Leiter hat, der Beschädigungen an der Membran erkennt und an ein daran angeschlossenes Mess- oder Signalgerät weitergibt. Es ergibt sich dadurch ein schichtweiser Aufbau der Membran aus Membranteller, Leiterschicht und Membranteller in seiner einfachsten Ausführungsform. Je nach Einsatzzweck der Membran werden die Membranteller aus entsprechend ausgebildeten Materialien hergestellt. Eine sehr günstige Ausführungsform insbesondere für den Einsatz der Membran bei Lebensmittel oder chemischen Produkten wird dann erreicht, wenn der mit dem zu fördernden Fluid in Berührung stehende Membranteller aus PTFE (Polytetrafluorethylen) und der außenliegenden Membranteller aus einem Elastomer gebildet wird. Der Membranteller aus PTFE hat eine hohe Widerstandsfähigkeit gegenüber agressiven chemischen Medien, während der Membranteller aus dem Elastomer eine hohe Elastizität aus weisen kann. Im Falle einer Undichtheit am Membranteller aus PTFE wird diese durch den auf der Innenseite des Membrantellers angeordneten Überwachungsleiter entdeckt und nach außen gemeldet. Dabei verbleibt der Elastomerteller selbst dicht und erfüllt die Funktion einer zweiten Barriere. Die besonders bevorzugte Ausbildung der Membran sieht folglich vor, daß die Membran als Doppelmembran aus einem Membranteller aus PTFE oder vergleichbarem Material und einem Membranteller aus einem Elastomer ausgebildet ist und daß jeder Membranteller auf seiner Innenseite mit einer Schicht aus einem elektrisch leitfähigem Material belegt ist und daß die Schichten durch eine elektrisch isolierende poröse Vliesschicht voneinander getrennt sind. Die Herstellung einer solchen Membran ist vergleichsmäßig einfach und es wird die gesamte Fläche des Membrantellers abgedeckt, so daß selbst geringfügigste Beschädigungen entdeckt werden können.

Die Anbringung der Leiter am zugehörigen Membranteller kann auf unterschiedliche Weise erfolgen. Günstige Möglichkeiten sind Heißkleben, Anvulkanisieren oder vergleichbare Verfahren.

### Kurzbeschreibung der Zeichnung

Es zeigt
- Figur 1: einen Membranteller mit aufgebrachter Metallleiterschlinge in der Draufsicht,
- Figur 2: einen Membranteller mit einer geschlossenen Lichtleiterschleife in der Draufsicht,
- Figur 3: einen Membranteller mit einem offenen Lichtleiter,
- Figur 4: einen Membranteller mit einem Flüssigkeitskanal und
- Figur 5: einen Schnitt durch eine Membran aus zwei Membrantellern und zwei Leitern

### Ausführung der Erfindung

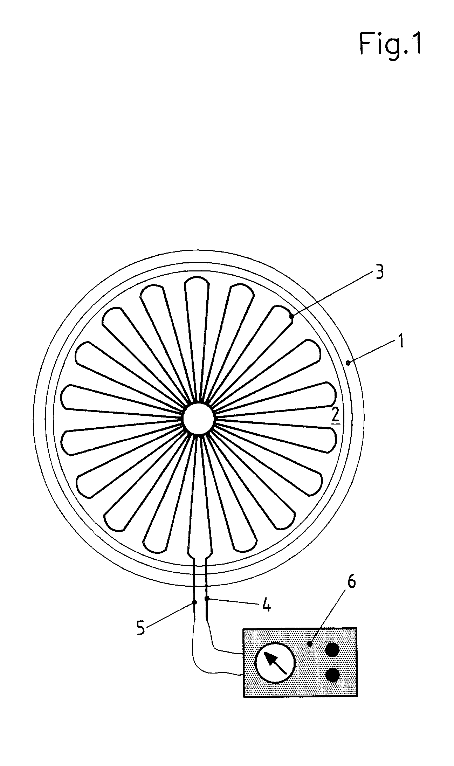

In den Figuren 1 bis 4 sind Membranteller in der Draufsicht gezeigt die mit unterschiedlichen Leitern auf ihrer Innenfläche 2 belegt sind. So ist in der Figur 1 auf der Innenfläche 2 des Membrantellers 1 eine Leiterschlinge 3 aufgebracht, die beispielsweise aus Metall oder einem elektrisch leitfähigen Elastomer besteht. Die Schlinge 3 ist strahlenförmig auf dem Membranteller 1 angeordnet. Die Enden 4 und 5 der Schlinge 3 sind mit dem Messgerät 6 verbunden.

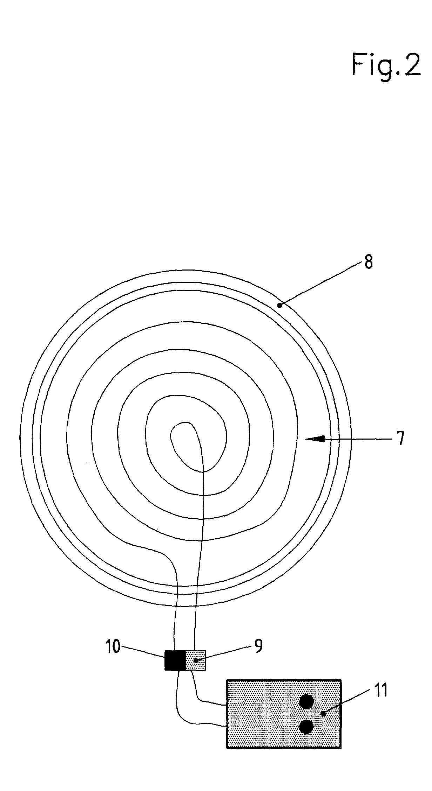

Der Figur 2 ist anstelle einer Leiterschlinge aus einem elektrisch leitfähigen Material ein Lichtleiter 7 auf dem Membranteller 8 angebracht. Der Lichtleiter 7 ist in Form einer Spirale aufgebracht und seine Enden sind mit entsprechenden optischen Geräten verbunden, von denen das Gerät 9 ein Lichtsignal aussendet, welches vom Gerät 10 empfangen wird. Ein entsprechendes Messgerät 11 wertet das Lichtsignal aus und je nach Intensität der Strahlung wird eine Ermüdung oder auch eine Beschädigung des zugehörigen Membrantellers erkannt.

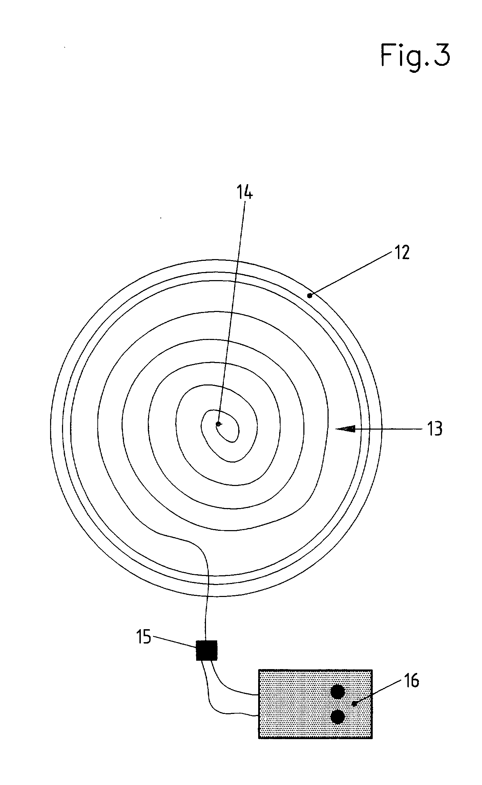

In der Figur 3 ist der Membranteller 12 mit einem offenen Lichtleiter 13 versehen, der ein verspiegeltes Ende 14 hat. Ein entsprechendes optisches Gerät 15 dient zur Aussendung und zum Empfang entsprechender Lichtsignale die im Messgerät 16 verarbeitet und angezeigt werden.

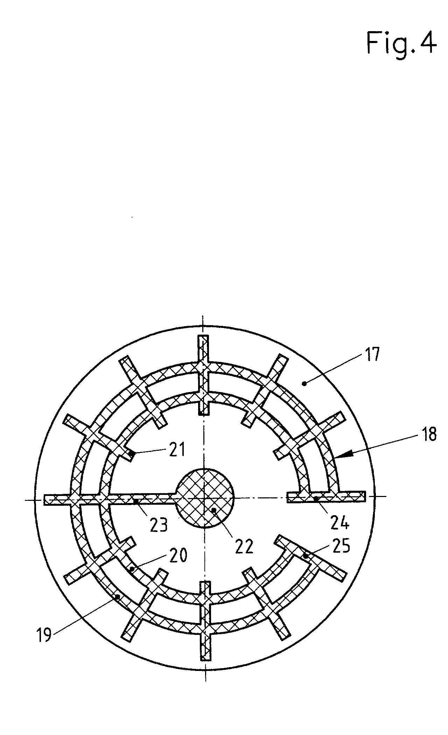

In der Figur 4 ist ein Membranteller 17 dargestellt, der mit einem Kanal 18 für ein flüssiges Medium versehen ist. Der Kanal 18 besteht aus zwei konzentrisch angeordneten Ringkanälen 19 und 20 mit speichenartig angeordneten Verbindungskanälen 21 und einem in der Mitte der Membran befindlichen Zentralbecken 22, das über den Speicherkanal 23 mit den Ringkanälen 19 und 20 verbunden ist. Die Ringkanäle 19 und 20 sind im vorliegenden Fall nicht vollständig geschlossen, sondern durch die Speicherkanäle 24 und 25 unterbrochen. Die Kanäle sind an ein Messgerät angeschlossen, welches zur Brucherkennung dient.

In den Figuren 1 bis 4 ist jeweils die Oberfläche eines Membrantellers gezeigt, auf dem die zugehörigen Leiter angebracht sind. Dieser Membranteller ist bevorzugt der zum Medium hin liegende Membranteller und die Leiter sind auf seiner vom Medium abgewandten Innenseite angebracht.

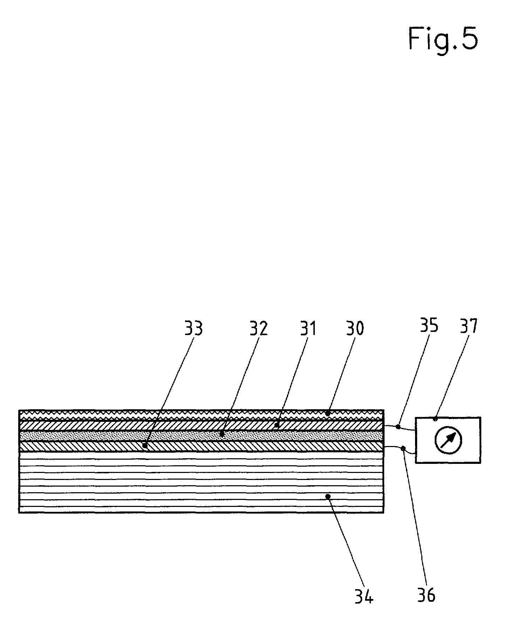

In der Figur 5 ist im Schnitt eine Membran 1 gezeigt, die einen schichtartigen Aufbau hat. Sie besteht aus dem zum Medium hingewandten Membranteller 30 einem elektrisch leitfähigen Material, einem Vlies 32 als Isolatorschicht, einer zweiten elektrisch leitfähigen Schicht 33, die mit dem zweiten Membranteller 34 aus einem elastomeren Werkstoff verbunden ist. Eine solche Membran kann sehr einfach hergestellt werden, indem die einzelnen Schichten aufeinandergelegt durch Heißverkleben oder Vulkanisieren miteinander verbunden werden. Die beiden elektrisch leitfähigen Schichten 31 und 33 werden über Ausgänge 35 und 36 mit dem Messgerät 37 verbunden. Bei einem Membranriß dringt elektrisch leitfähige Flüssigkeit in das elektrisch nicht leitende Vlies 32 und der zunächst hohe Widerstand zwischen den leitenden Schichten 31 und 33 wird herabgesetzt. Durch das Messgerät 37 wird der Membranriss angezeigt.

## Patentansprüche

1. Einrichtung zur Erkennung von Undichtheiten und Ermüdungen an Membranen, **dadurch gekennzeichnet, daß** die Membran aus wenigstens zwei Membrantellern (30,34) besteht und daß zumindest einer der Membranteller (1,8,12,17,30) auf seiner Innenfläche mit wenigstens einem Leiter (3,7,13,18,31) belegt ist, der bei einer Veränderung an der Membran beziehungsweise am Leiter (3,7,13,18,31) eine Änderung einer Messgröße bewirkt.

2. Einrichtung nach Anspruch 1, **dadurch gekennzeichnet, daß** der Leiter (3) eine am Membranteller (1) angefügte elektrisch leitfähige Elastomerleiterschlinge oder Metallleiterschlinge ist.

3. Einrichtung nach Anspruch 1 oder 2, **dadurch gekennzeichnet, daß** die Leiterschlingen strahlenförmig am Membranteller (1) angeordnet sind.

4. Einrichtung nach Anspruch 1, **dadurch gekennzeichnet, daß** der Leiter (7,13) ein am Membranteller (8,12) angebrachter aus Glasfaser oder Kunststofffaser gebildeter Lichtleiter ist.

5. Einrichtung nach Anspruch 4, **dadurch gekennzeichnet, daß** der Lichtleiter (8) eine geschlossene Leiterschleife hat.

6. Einrichtung nach Anspruch 4, **dadurch gekennzeichnet, daß** der Lichtleiter (13) eine offene Leiterschleife mit verspiegeltem Ende ist.

7. Einrichtung nach Anspruch 1, **dadurch gekennzeichnet, daß** der Leiter ein am Membranteller (17) angefügter Kanal (18) mit einem flüssigen Medium ist.

8. Einrichtung nach Anspruch 7, **dadurch gekennzeichnet, daß** der Kanal (18) konzentrisch zur Membrantellermitte angeordnet ist.

9. Einrichtung nach Anspruch 1, **dadurch gekennzeichnet, daß** der Leiter (3) ein leitfähiges Vliesstoff- oder Elastomermuster ist.

10. Einrichtung nach Anspruch 9, **dadurch gekennzeichnet, daß** das Vliesstoffmuster aus einem Vlies mit Kohlenstofffäden besteht.

11. Einrichtung nach Anspruch 10, **dadurch gekennzeichnet, daß** das Vliesstoffmuster aus einem Vlies ausgestanzt ist.

12. Einrichtung nach Anspruch 9, **dadurch gekennzeichnet, daß** das Vliesstoff- oder Elastomermuster durch ein Gewebe mit metallischen und/oder Kohlenstofffasern gebildet ist.

13. Einrichtung nach Anspruch 9, **dadurch gekennzeichnet, daß** das Elastomermuster Metall- und/oder Kohlenstoff-Partikel enthält, die im Siebdruckverfahren auf den Membranteller aufgebracht sind.

14. Einrichtung nach Anspruch 9, **dadurch gekennzeichnet, daß** der Elastomerleiter aus einer elektrisch leitfähigen Elastomerfolie besteht, die auf den Membranteller aufvulkanisiert ist.

15. Einrichtung nach einem der Ansprüche 1 bis 14, **dadurch gekennzeichnet, daß** einer der Membranteller (30) aus PTFE (Teflon) und ein weiterer Membranteller (34) aus einem Elastomer besteht.

16. Einrichtung nach einem der Ansprüche 1 bis 15, **dadurch gekennzeichnet, daß** die Membran als Doppelmembran aus einem Membranteller (30) aus PTFE oder vergleichbarem Material und einem Membranteller (34) aus einem Elastomer ausgebildet ist, daß jeder Membranteller (30,34) auf seiner Innenseite mit einer Schicht (31,33) aus einem elektrisch leitfähigem Material belegt ist und daß die Schichten (31,33) durch eine elektrisch isolierende poröse Vliesschicht (32) getrennt sind.
